# EUROPEAN PATENT APPLICATION

(11) **EP 1 638 107 A1**
(43) Date of publication of application: **22.03.2006**
(21) Application number: 04077593.4
(22) Date of filing: 17.09.2004
(51) Int. Cl.: G11B 33/04

(54) **Connector for connecting a CD to a flat surface**

(71) Applicant: Henzo B.V., 6045 GL Roermond (NL)
(72) Inventor: Hoekstra, Johannes Albertus Nicolaas, 3053 JA Rotterdam (NL)
(74) Representative: Winckels, Johannes Hubertus F.

(57) **Abstract**

Connector for connecting a Compact Disc (CD) to a surface, the connector is connectable to for instance a sheet of paper in a photo album or is incorporated in the surface to which a CD is to be connected, wherein the connector comprises a first part and at least one second part, wherein the connector can in use adopt a first position when unconnected to a CD and a second position for connecting with a CD, in the first position the first part and the second part extend in a non-overlapping manner and aligned with each other within substantially one plane, in the second position the first part extends in a first plane substantially parallel to the surface to which the CD is to be connected and the second part extends in a second plane which is somewhat tilted with respect to the first plane so as to define in use between the second part and a surface to which the CD is to be connected, a slit for holding a part of a CD, wherein the connector is transformable from the first position into the second position by slightly bending the second part with respect to the first part.

## Description

The invention relates to a connector for connecting a CD to a flat surface. The connector is connectable to for instance a sheet in a photo album.

Nowadays images presented in a photo album may have a digital record. Such a digital record is often stored on a CD (Compact Disc). It is convenient when the CD, on which digital records of the photo shown in the photo album are stored, is kept with the photo album. It is possible to provide a CD "case" within the photo album. Such a casing is usually of an envelop type and comprises two square sheets attached to each other along three peripheral sides of the sheets, allowing for a slit-like opening on one peripheral side of the casing. It is possible that such an envelop is provided with a closing flap. Such an envelop can easily be attached to a sheet of a photo album. However, a CD cannot easily be taken out of such a cover. The two closed peripheral sides, situated opposite each other, may need to be squeezed a little towards each other so as to allow for widening of the slit-like opening for grabbing the CD placed in the cover. This is not easily done when the cover is attached to a sheet in the photo album.

A CD can obviously be provided in a well-known CD box, which can be attached to a sheet of paper in a photo album. However, such a well-known CD box is relatively thick. Placing such a CD box in a photo album would either damage sheets of paper in the photo album when the photo album is closed or necessitate special arrangement for accommodating the CD box, making the photo album a costly album.

There is a need for providing a new and conveniently operable connector for connecting a CD to a flat surface.

This need is met by a connector according to the invention which comprises a first part and at least one second part, wherein the connector can in use adopt a first position when unconnected to a CD and a second position for connecting with a CD, in the first position the first part and the second part extend in a non-overlapping manner and aligned with each other within substantially one plane, in the second position the first part extends in a first plane substantially parallel to the surface to which the CD is to be connected and the second part extends in a second plane which is somewhat tilted with respect to the first plane so as to define in use between the second part and a surface to which the CD is to be connected, a slit for holding a part of a CD, wherein the connector is transformable from the first position into the second position by slightly bending the second part with respect to the first part.

Such a connector may in use be connected to a sheet of an album, as explained below.

As the connector can adopt to a first position in which a first part and a second part of the connector extend in a non-overlapping manner and aligned with each other within substantially one flat plane, the connector is unlikely to deform any of the sheets of closed photo album when no CD is connected. The thickness of the sheet to which the convector is connected is only increased locally by the thickness of the connector which will be minimal. In the figure description this will be discussed further. When the connector is in the second position, holding a CD, the thickness of the sheet to which the connector is connected is increased locally only by the thickness of the CD, when the album is in a closed condition. Again, no serious deformation of any sheets of the photo album is unlikely to occur. Furthermore, the connector can very easily be transformed from the first position into the second position by slightly bending the second part with respect to the first part when connecting the CD to the connector. During this bending the first part can remain parallel to the sheet, again preventing deformation of the sheet. Also removing the connector is convenient, as the second part can be bent independently of the first part which can again remain parallel to the plane of the flat surface.

Further advantages will become clear later when an examplerary embodiment of a connector according to the invention is described and discussed.

In the embodiment of a connector according to the invention, the connector is arranged to engage with the central recess in a CD. This offers the advantage that the connector can be relatively small in comparison with an embodiment wherein the connector is arranged to engage with the peripheral edge of the CD.

In an embodiment of the connector according to the invention, the second part is in a relaxed state too large to enter the central recess of a CD, wherein the second part is compressible so that the second part can enter the central recess of a CD. This allows for connecting the CD to the connector by clamping or bolting the CD to the second part using the inner wall of the central recess of the CO.

It is possible that in a connector according to the invention the second part is provided with a slot and/or at least one pre-weakened line for facilitating compressing the second part.

It is further possible that the second part is provided with a neck for locking a CD when the second part extends through the central recess of a CD. This allows for bolting the CD without having to clamp the CD using the resiliency of the second part and the inner wall of the central recess of the CD. The latter may cause on the long term, deformation of the second part reducing the useful lifetime of the connector.

In such an embodiment the second part may be tapered. This facilitates entering of the second part in the central recess of the CD.

In an embodiment of a connector according to the invention, the connector comprises a plurality of second parts. It is possible that hence a plurality of CD's can be connected to a flat surface using the connector. It is also possible that one connector comprises a plurality of second parts so as to clamp the peripheral edges of the CD using the outer circumference of the CD.

An embodiment of a connector according to the invention is connectable to a sheet by mechanical engagement if the sheet comprises at least two recesses through which the connector can extend for connection with the sheet. This has the advantage that the connector can be connected to a sheet without having to use a glue or other fasteners such as staples or paper clips. It furthermore allows for removing the connector without having to damage the sheet and/or the connector. The connector may be re-usable.

In an embodiment of a connector according to the invention, the connector is connectable to a sheet by chemical engagement. In this case a glue may be applied allowing for a thorough fixation to the sheet.

Such a connector may be provided with double-sided tape for connecting to a sheet. In this case no extra fastening means such as glue may be needed for fixing the connector to the sheet. The sheet does not need to be prepared for fixation of the connector.

It is very well possible that the connector is fabricated out of a sheet of plastic. Preferably such a plastic is a plastic, not releasing toxic compounds when burnt as waste after use. Polypropylene is a suitable plastic.

The invention is further explained by means of a drawing. Herein shows:
Fig. 1 a top view of a first embodiment of a connector according to the invention;
Fig. 2 a back view of a first embodiment as shown in figure 1;
Fig. 3 an enlargement of the first embodiment shown in fig. 1 and fig. 2;
Fig. 4 a side view of the first embodiment in a first position;
Fig. 5 a side view of the first embodiment in a second position;
Fig. 6 a perspective view of the first embodiment in the second position;
Fig. 7 the first embodiment in use in the second position;
Fig. 8 a second embodiment of a connector according to the invention;
Fig. 9 a side view of the second embodiment as shown in fig. 8;
Fig. 10 a top view of a third embodiment of a connector according to the invention; and
Fig. 11 a side view of a third embodiment as shown in figure 9 in use;
Fig. 12 a top view of a fourth embodiment of a connector according to the invention.

In the drawing like parts have like references.

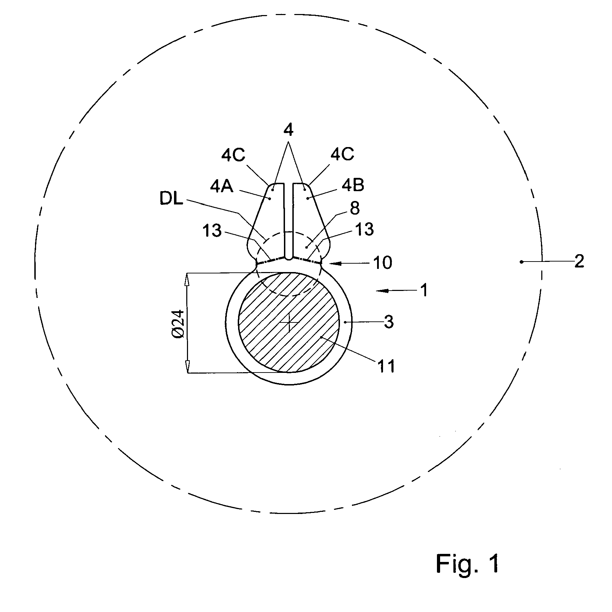

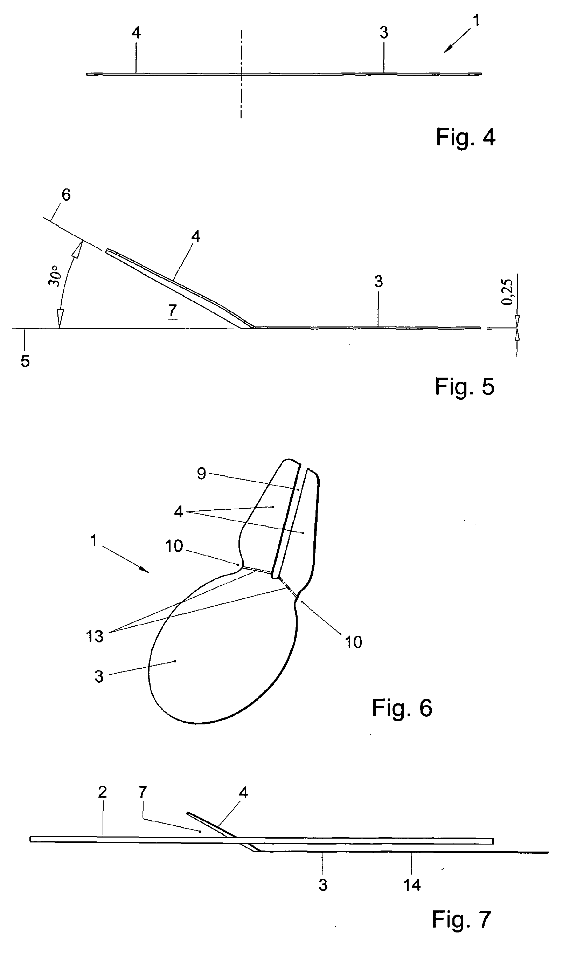

Figure 1 shows a first embodiment of a connector according to the invention. The connector 1 for connecting a Compact Disc (CD) to a surface (not shown) is connectable to for instance a sheet of paper or album board of a photo album. The connector comprises a first part 3 and at least one second part 4. The connector can in use adopt a first position as shown in figure 4, when unconnected to a CD. The connector 1 can adopt a second position for connecting with a CD. As shown in figure 4, in the first position a first part 3 and a second part 4 extend in a non-overlapping manner and aligned with each other within substantially one plane. In the second position, as shown in figures 5 and 7, the first part 3 extends in a first plane 5 which is in use substantially parallel to the surface to which the CD is to be connected and the second part 4 extends in a second plane 6 which is somewhat tilted with respect to the first plane 5. In the second position between a flat surface 14 to which the CD is to be connected and the second part 4, a slit 7 is defined for holding a part of a CD. The connector 1 is transformable from the first position (shown in figure 4) into the second position (shown in figures 5, 6 and 7) by slightly bending the second part 4 with respect to the first part 3. The embodiment shown in figures 1-7 is arranged to engage with the central recess 8 in a CD 2. In figure 1 the central recess 7 is shown by a dashed line. As clearly shown in figure 1, the second part 4 is in a relaxed state too large to enter the central recess 7 of a CD 2. The second part 4 is however compressible so that the second part 4 can enter the central recess 7 of a CD 2. This will be explained later. In figure 1, 2 and 7 the CD 2 is shown in its approximate position with respect to the connector 1.

Figure 1 is inteded to be a top view of the connector 1 in its second position, connecting a CD 2. The first part 3 of the connector 1 is in that situation below the level of the CD 2 whereas the second part 4 of the connector 1 is largely above the level of the CD 2. This is further illustrated in figure 7.

In the embodiment shown in figures 1-7, the second part 4 is provided with a slot 8. This facilitates compressing the second part for entering the central recess of the CD 2. The connector 1 is preferably provided with at least one pre-weakened line to further facilitate transforming the connector from the first position into the second position.

In the embodiment shown in figures 1-7, the connector is further provided with a neck 9 for locking a CD 2 when the second part 4 extends through the central recess 7 of the CD 2. In the embodiment shown in figures 1-7 the second part 4 is tapered from the neck 9.

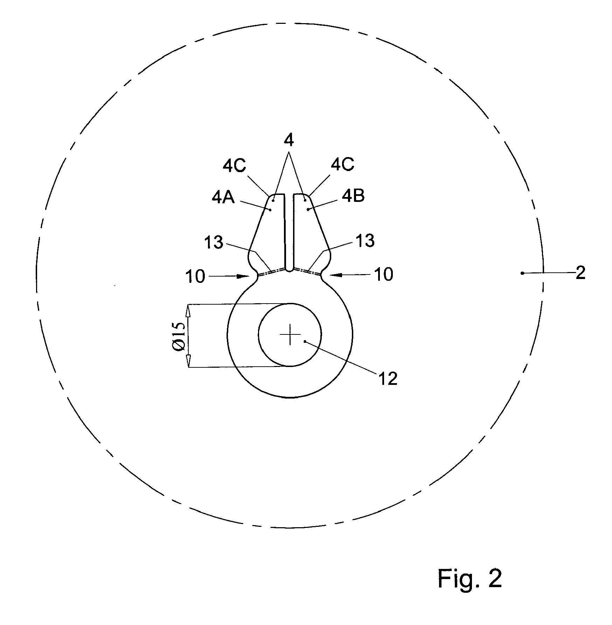

In figure 1 an area 11, shown by shading, may be used for placing for instance a sticker onto which information can be written. This information may simply be a name of a company providing the connector or information in relation to the CD to be connected to the connector. The connector shown in figures 1-7 is connectable to a sheet by chemical engagement. It is for instance possible that the connector 1 is provided with double-sided tape for connecting to the sheet. In figure 2, a circular area 12 is indicated as a possible area where double-sided tape may be provided for connecting to the sheet. Although it is possible that the connector is fabricated out of a sheet of relatively stiff paper, the connector is preferably fabricated out of a sheet of plastic. This plastic may for instance be polypropylene, which does, as far as known, not release toxins when it is burnt as waste after its use.

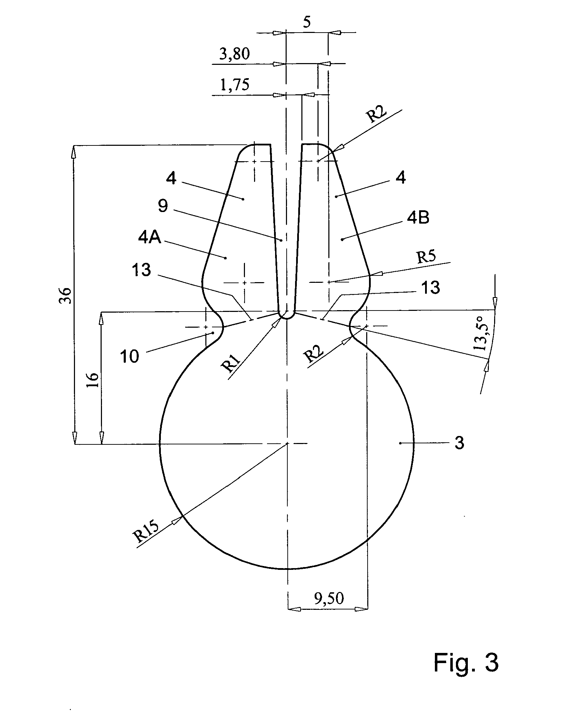

Figure 3 shows information with respect to preferred dimensions of a connector 1 according to a first embodiment of the invention. The dimensions are given in millimeters and the drawing shows the dimensions, for the sake of clarity twice as large as in practice is preferred. Figure 7, showing a side view of a connector according to the invention in its second position connecting a CD 2, shows a slit 7 formed by the first plane 5 and the second plane 6 enclosing an angle of 30 degrees. It is however possible that a part of the second part 4 that protrudes from the CD 2 can adopt to a position wherein the second part 4 is parallel to the CD 2. This will occur when the connector is connected to an inner page of an album that is closed. Connector and CD will then occupy very little "depth" within the book or photo album and will as such not deform the book or album.

The connector as shown in figures 1-7, works as follows. The first part 3 is connected to the surface to which the CD is to be connected. This connection may be by chemical engagement. When this surface is part of a sheet or page of a book or an album, the connector does not occupy much depth, i.e. does not add much thickness to the book or album when the book or album is closed. When a CD is to be connected, the second part is compressed a little by for instance pushing positions P and P' to each other. Due to the slot P and, if provided, due to the preweakened lines 13 and their orientation, the second part y adopts to a deformed state which allows the second part to enter the central recess of a CD. In this state the normals of each of the parts 4A and 4B of the second part 4 have a component directed to the other part 4A, 4B of the second part 4. The parts 4C of the second part 4 will first enter the central recess of the CD. By pushing the CD then in the direction of the first part 3 along a longitudinal direction of the second part 4, the second part 4 will be compressed as the CD progresses towards the neck 10 of the second part 4. Once the CD has reached the neck 10 the second part can relax back to a relaxed state in which the second part is too large for disconnection of the CD. In other words, the CD is then locked. For disconnection of the CD, the second part has to be brought into the deformed state and the CD has to be moved towards the tapered end of the second part 4.

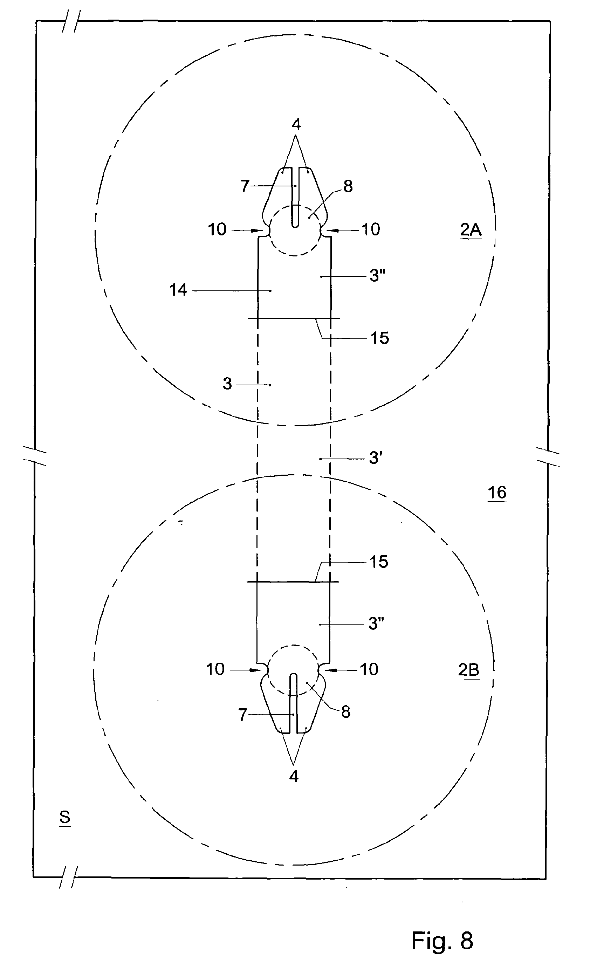

Figure 8 shows a connector 14 according to a second embodiment of the invention. Also this connector 14 is connectable to for instance a sheet S of paper or album board in a photo album. The connector 14 is connectable to such a sheet S by mechanical engagement if the sheet comprises at least two recesses 15 through which the connector 14 can extend for connection to the sheet 16. According to the embodiment as shown in figure 8 the recesses 15 are slit-like. The connector 14 comprises two second parts 4 on either side of a first part 3. The approximate positions of two CD's 2a, 2b when connected to the connector 14 are shown in figure 8.

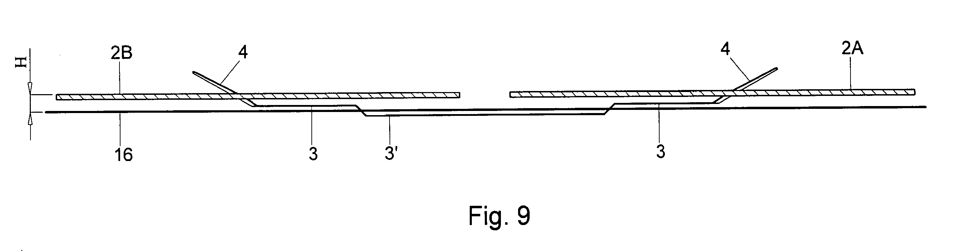

As shown in figure 9 which is a side view of figure 8, in use, a part 3' of first part 3 is below the level of the surface 16, in this case sheet 16, whereas on either side of this part 3' parts 3" are above the level of the sheet 16, second part 4 extends through the central recess 8 in the CD's 2a, 2b so as to connect the CD's 2a, 2b via the connector 14 with the surface S, or sheet 16 in this case. Also in this situation it applies that the second part 4 may be sticking out from the plane in which the CD's 2a, 2b lay, so as to minimise the height H of the connector 14 and CD's 2a. 2b. For the sake of clarity space is shown between the CD's 2a, 2b and the surface 16. In practice this will of course be a minimum of about a thickness of the connector, which may for instance have a quarter of a millimeter as thickness (see for instance figure 5).

The second embodiment as shown in Fig. 8 and 9 works as far as connecting a CD is concerned, similar to the first embodiment shown in Figs. 1-7.

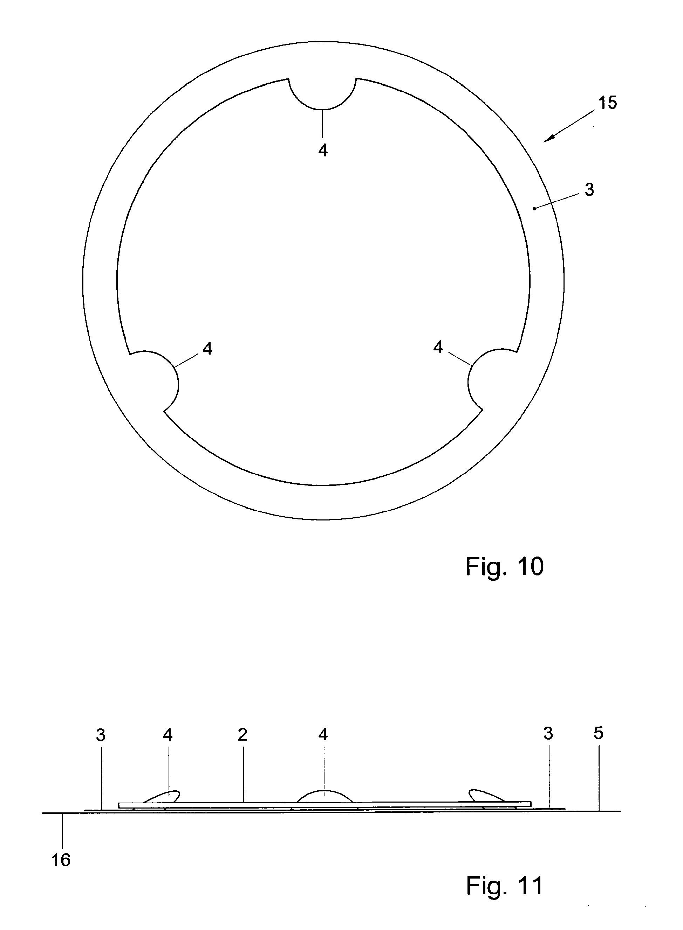

Figure 10 shows a connector 15 according to a third embodiment of the invention. In this embodiment the connector 15 comprises a first part 3 which is annular in shape and three second parts 4. Also in this case the connector 15 can adopt a first position when unconnected to a CD. In the first position the first part 3 and the second parts 4 extend in a non-overlapping manner and are aligned with each other within substantially one plane. The connector 15 can also adopt a second position in which the first part 3 extends in a first plane 5 and each of the second parts 4 extend in a second plane (not shown) which is somewhat tilted with respect to the first plane 5. Also with this embodiment it is possible to define in a second position, in use, a slit 7 for holding a part of a CD (not shown) between each of the second parts and a surface to which the connector is to be connected.

Figure 11 shows a side view of the third embodiment in use.

This embodiment works much simpler than the embodiment previously shown. The second parts 4 need to be brought into the second position and the CD can be placed within the area defined and/or enclosed by the first part. On release of the second parts the CD will be clamped.

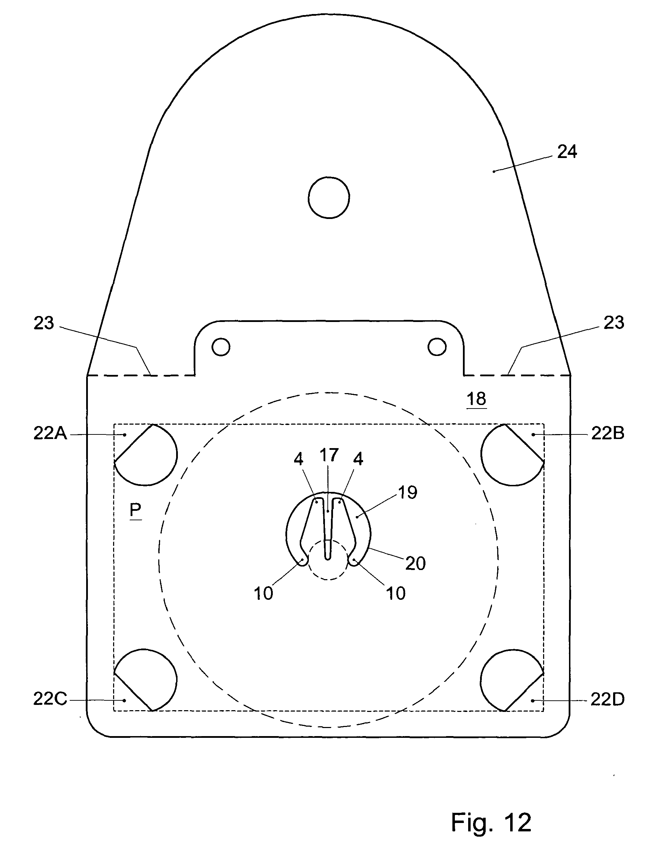

Figure 12 shows a fourth embodiment of a connector according to the invention. This connector 17 for connecting a CD to a surface 18 is incorporated in the surface 18 to which the CD 2 is to be connected. The approximate position of the CD 2 when connected to the surface 18 by a connector 17, is indicated by dashed lines in figure 12. In this embodiment, second part 4 is formed by cutting a recess 19 in sheet 18. A perimeter of recess 19 is shown by line 20. The sheet 18 may also be provided with recesses 21 for capturing a rectangular photograph indicated by dotted line 22. The corners 22a, 22b, 22c, 22d will be at another side of sheet 18 when compared to a side where a part of the photograph P which does not comprise any of these corners 22a, 22b, 22c, 22d is situated. The surface 18 may be provided by a sheet of for instance plastic and may further comprise an overleaf part 24 which can be folded along lines 23 to provide some protection for a CD 2 connected via connector 17 with surface 18. It is for instance possible to connect the CD to one side of sheet 18 and photograph P substantially to a another side of sheet 18, corners 22a, 22b, 22c, 22d being situated on the one side of sheet 18.

The invention is not limited to the embodiments shown above. Slit 9 may have different dimensions then the dimensions shown in the figures. Slit 9 may for instance be circular-shaped having a perimeter closed in itself. The pre-weakened lines may be formed by a ril, perforations, or flexible tape which is connecting the first part 3 with the second part 4 which would be loose from each other without the tape. The connector may be transparent or non-transparent. If non-transparent the connector may be "colourless" or showing a particular colour. The first part may be of any form suitable and may for instance be a complete sheet in itself. It is also possible that the second part 4 is such that some information can be written on these parts, relating the particular connector with a particular CD, for instance a CD on which digital versions of figure 1-16 are stored.

Such variants are all understood to fall within the framework of the invention as described by the appended claims.

## Claims

1. Connector for connecting a Compact Disc (CD) to a surface, the connector is connectable to for instance a sheet of paper in a photo album or is incorporated in the surface to which a CD is to be connected, wherein the connector comprises a first part and at least one second part, wherein the connector can in use adopt a first position when unconnected to a CD and a second position for connecting with a CD, in the first position the first part and the second part extend in a non-overlapping manner and aligned with each other within substantially one plane, in the second position the first part extends in a first plane substantially parallel to the surface to which the CD is to be connected and the second part extends in a second plane which is somewhat tilted with respect to the first plane so as to define in use between the second part and a surface to which the CD is to be connected, a slit for holding a part of a CD, wherein the connector is transformable from the first position into the second position by slightly bending the second part with respect to the first part.

2. Connector according to claim 1, wherein the connector is arranged to engage with the central recess in a CD.

3. Connector according to claim 1 or 2, wherein the second part is in a relaxed state too large to enter the central recess of a CD, wherein the second part is deformable so that the second part can enter the central recess of a CD.

4. Connector according to claim 3, wherein the second part is provided with a slot.

5. Connector according to any one of claims 2, 3 or 4, wherein the second part is provided with a neck for locking a CD when the second part extends through the central recess in the CD.

6. Connector according to claim 5, wherein the second part is tapered.

7. Connector according to any one of the previous claims, wherein the connector comprises a plurality of second parts.

8. Connector according to any one of the previous claims, wherein the connector is connectable to a sheet by mechanical engagement if the sheet comprises at least two recesses through which the connector can extend for connection with the sheet.

9. Connector according to any one of the previous claims, wherein the connector is connectable to a sheet by chemical engagement.

10. Connector according to claim 9, wherein the connector is provided with double-sided tape.

11. Connector according to anyone of the previous claims, wherein the connector is fabricated out of a sheet of plastic.

12. Connector according to claim 11, wherein the plastic is polypropeen.

13. Connector according to anyone of the previous claims, wherein the connector is provided with at least one pre-weakened line to facilitate transforming the connector from the first position into the second position.
